(19) Europäisches Patentamt
European Patent Office
Office européen des brevets

(11) **EP 1 886 428 B1**

(12) **EUROPEAN PATENT SPECIFICATION**

(45) Date of publication and mention
of the grant of the patent:
**13.06.2012 Bulletin 2012/24**

(51) Int Cl.:
***H04L 27/26*** (2006.01)   ***H04L 5/00*** (2006.01)

(21) Application number: **05757211.7**

(86) International application number:
**PCT/CN2005/000859**

(22) Date of filing: **15.06.2005**

(87) International publication number:
**WO 2006/133600 (21.12.2006 Gazette 2006/51)**

(54) **TWO-DIMENSIONAL PILOT PATTERNS**

ZWEIDIMENSIONALE PILOTMUSTER

STRUCTURES PILOTES BIDIMENSIONNELLES

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**13.02.2008 Bulletin 2008/07**

(73) Proprietor: **Huawei Technologies Co., Ltd.**
**Longgang District, Shenzhen**
**Guangdong 518129 (CN)**

(72) Inventor: **POPOVIC, Branislav**
**SE 17167 Solna (SE)**

(74) Representative: **Isarpatent**
**Patent- und Rechtsanwälte**
**Friedrichstrasse 31**
**80801 München (DE)**

(56) References cited:
**EP-A- 1 699 199**          **WO-A1-2004/073276**
**CN-A- 1 605 172**          **US-A1- 2004 095 902**
**US-A1- 2004 246 998**      **US-B1- 6 654 429**

- **YOUNG-HO JUNG ET AL: "Base station identification for FH-OFDMA systems" VEHICULAR TECHNOLOGY CONFERENCE, 2004. VTC 2004-SPRING. 2004 IEEE 59TH MILAN, ITALY 17-19 MAY 2004, PISCATAWAY, NJ, USA, IEEE, US, vol. 5, 17 May 2004 (2004-05-17), pages 2452-2455, XP010766698 ISBN: 978-0-7803-8255-8**
- **MERSEREAU R M ET AL: "Multiple Access Frequency Hopping Patterns with Low Ambiguity" IEEE TRANSACTIONS ON AEROSPACE AND ELECTRONIC SYSTEMS, IEEE SERVICE CENTER, PISCATAWAY, NJ, US, vol. AES-10, no. 4, 1 July 1981 (1981-07-01), pages 571-578, XP011166858 ISSN: 0018-9251**
- **SIMEONE O ET AL: "Adaptive pilot pattern for OFDM systems" COMMUNICATIONS, 2004 IEEE INTERNATIONAL CONFERENCE ON PARIS, FRANCE 20-24 JUNE 2004, PISCATAWAY, NJ, USA,IEEE, vol. 2, 20 June 2004 (2004-06-20), pages 978-982, XP010710082 ISBN: 978-0-7803-8533-7**

**Description**

**Field of the invention**

The present invention relates to communications systems with multiple (sub-) carriers. More exactly it concerns a method according to the preamble of claim 1. Further, it concerns a transmitter, a receiver, a multiple access communication system and a radio multiple access communication system according to claims 8, 9, 10, 11, respectively.

**Background of the invention**

Multiple access communications systems are distinguished by the capability of efficient sharing of the limited bandwidth between the multiple users. The mutual interference between the signals of multiple users can be controlled or completely eliminated by different mechanisms, such as time-division multiple access (TDMA), frequency-division multiple access (FDMA), orthogonal frequency-division multiple access (OFDMA), code-division multiple access (CDMA) and multi-carrier CDMA (MC-CDMA).

Besides the data signals, there are a number of other signals transmitted from each user that serve to support the correct reception of data signals. One example of such supporting transmitted signals is pilot signals for channel estimation in the receiver. Such signals are predetermined tones placed in different locations in frequency and time of the communication channel, forming specific patterns. In the cellular systems, such pilot patterns for channel estimation can be transmitted both on the downlink (DL) and the uplink (UL).

In FDMA, OFDMA or MC-CDMA systems the pilot patterns are used in the receivers to obtain samples or the transmission channel both in time and frequency dimensions. These pilot patterns have to allow equidistant sampling of the signals in said both dimensions, in order to estimate a given transmission channel in the most efficient way, i.e. in order to alleviate interpolation or filtering of the channel samples.

In a broadcast system, such as Digital Video Broadcasting (DVB), one pilot pattern is enough for the whole system. However, for instance in cellular systems with OFDM or, in general, multi-carrier transmission, each of the base stations needs to transmit on the downlink a two-dimensional pilot pattern for the channel estimation in a user equipment (UE). If all the transmitted pilot patterns are the same, they will interfere in the UE, especially if the UE is close to the cell edge. As pilot signals in general have higher power than data signals, this interference becomes particularly critical. Thus it is desirable to have a set of different pilot patterns such that each pair of pilot patterns has a small maximum number of hits ("hit" is the transmission on the same frequency both from the serving and non-serving cells during an observed OFDM symbol interval at the UE). The different pilot patterns from the set can be allocated to the neighbouring base stations.

There have been several efforts to design pilot patterns for multiple access communication systems, trying to optimise various parameters.

EP 1 148 673 A2 describes pilot pattern designs on the basis of Latin square sequences. Here the pilot patterns are used not just for the channel estimation, but also for the base station identification (cell search) and DL synchronisation. Each base station has a unique pilot pattern. Each pilot pattern is defined over the whole available frequency spectrum, with a certain time periodicity. The different pilot patterns can collide at most once per such period. Looking at the patterns, they form lines in a time-frequency grid of the communication channel. These lines have different slopes for different patterns. The potential problem for channel estimation with this approach is that the sampling interval in frequency domain depends on the slope, so the different base stations will have different minimum sampling intervals.

In the article "Base station identification for FH-OFDMA systems", VTC 2004 spring, 2004, this problem is avoided as the pilot tones are located periodically in frequency, so one can control the sampling interval in the frequency domain independently of the slope of the Latin square sequence and so enabling equidistant sampling of the patterns.

One problem with the prior art above is that when a certain portion of the communication channel is bad, or when experiencing interference from a neighbouring base station, the pilots may be subject to a substantial amount of interference. This can severely degrade the performance of such a system.

Another problem with prior art pilot patterns arises when pilot patterns are used with MIMO (Multiple Input, Multiple Output)-systems, which are systems that use multiple transmit and receive antennas. For such systems, each transmit antenna must be assigned with an orthogonal pilot pattern for the estimation of the particular transmission channel for that particular antenna. Also, different MIMO-systems should simultaneously use different pilot patterns with limited interference, making the need for more pilot patterns ever greater. Because the amount of patterns available according to prior art is limited, they soon could get exhausted when used with MIMO.

A further problem with the prior art is that pilot patterns are defined over the whole frequency spectrum. This sets a constraint on the possibility to flexibly plan the use of resources. There is a need for a method that could allocate pilots to predetermined parts of the T-F-grid that would be allowed for the use for pilots. In this way it would be possible to easily separate different transmission channels in the T-F-grid (signalling, data, pilots).

EP 1 886 428 B1

Yet another problem is to make sure that pilot patterns are as orthogonal as possible, also when users are not synchronised, i.e. under arbitrary time shift.

Patent application US 2004/0246998 A1 discloses a physical layer structure and related access schemes for unsynchronized communication networks. In this patent application, a cell-specific synchronization code uniquely associated with one of the transceiver stations is modulated onto at least one set of time-continuous signal components of a communication signal. Specifically in the illustrative example of FIG 6, the pilot channel 110 is pair-wise scattered onto sub-carriers having the same index in pairs of consecutive symbols.

## Summary

The present invention is to propose a solution for or a reduction of one or more of the problems of the prior art. The present invention is consequently to devise a method that enables flexible planning of pilot patterns with regard to occupied area of the T-F-grid, that enables better pilot pattern performance, in terms of mitigation of hits under bad transmission channel conditions or under interference from other users, that enables generation of a multitude of patterns, that also is suitable for MIMO-systems, and finally all of this while ensuring a certain level of orthogonality between pilot patterns, i.e., ensuring a predictable maximum amount of mutual hits between patterns, both under synchronous and asynchronous operation.

According to the invention this is accomplished by a method having the characteristics that are defined in claim 1, by a transmitter having the characteristics of claim 7, by a receiver having the characteristics of claim 8, by a communication system having the characteristics of claim 9 and by a radio communication system having the characteristics of claim 10.

According to the invention a method is devised for generating, in a multiple access communication system, two-dimensional pilot patterns for propagation channel estimation in time and frequency, with equidistant sampling, said patterns including tones placed in time and frequency units. The method includes:

-   generating a generic pilot pattern that covers a first dimension and covers partially a second dimension, within a segment of the second dimension where the propagation channel is considered to have a constant value, wherein the generic pilot pattern is obtained from an integer sequence by separating successive sequence elements by an equal number of empty signalling time-frequency units, the number of signalling time-frequency units corresponding to a required sampling interval in a first dimension, and by non-zero elements of the integer sequence determining one or more positions of tones in the second dimension; and

-   performing periodical duplication of the generic pilot pattern along the second dimension, where the duplication interval of the generic pilot pattern is equal to a required sampling interval in the second dimension, wherein the integer sequence represents polynomial coefficients of an associated polynomial and the corresponding generic pilot pattern belongs to a set of generic pilot patterns obtained from a set of associated polynomials with different coefficients. The first and second dimension could according to the invention be time and frequency, respectively, or vice versa. The integer sequence is obtained by mapping from a sequence f(i)= P[x(i)], where $P(x) = \sum_{j=0}^{k} n_j x^j$ is an associated polynomial of a degree k, whose argument function x(i) is a sequence of elements of a Galois Field, where "i" is the ordinal number of the sequence element x(i), and where multiplications and additions in the polynomial P(x) are performed in the Galois Field.

The method of the invention could be implemented in a transmitter for a multiple access communication system. Preferably, such a transmitter would be communicating with a corresponding receiver for a multiple access communication system including means for receiving and processing signals generated by the transmitter. Together they would form part of a multiple access communication system that would include at least one such transmitter and at least one such receiver.

According to the invention, in a radio multiple access communication system with a number of transmit antennas, various subsets of orthogonal pilot patterns according to the method of the invention could be allocated to different users, so that each orthogonal pattern is used for the transmission from a particular transmit antenna.

Additional features and advantages of the present invention will be apparent from the following description.

## Brief description of the drawings

Embodiments exemplifying the invention will now be described, by means of the appended drawings, on which

3

Figure 1 illustrates a time-frequency grid with a pilot pattern,

Figure 2 illustrates another time-frequency grid including three different pilot patterns,

Figure 3 illustrates a multiple access communication system, and

Figure 4 illustrates a radio multiple access communication system with a number of antennas.

**Detailed description of preferred embodiments**

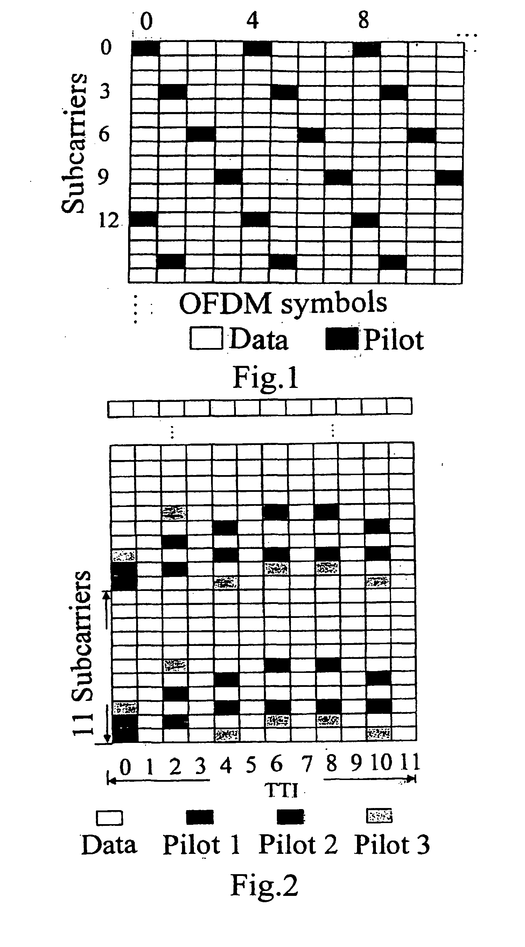

To familiarise the concept of pilot patterns, Figure 1 shows a T-F grid (time-frequency grid) including frequency and time axes, forming a communication channel. In this grid, an exemplary pilot pattern, for channel estimation, is depicted. The pilot pattern includes tones that are modulated on to certain carriers at certain time instances, these time/frequency slots with pilots are illustrated with black squares in the grid. In this example the pilot pattern can be said to have a slope in the grid.

According to the invention, a general design method for two-dimensional pilot patterns for channel estimation is specified, on the basis of the repetition of a generic pilot pattern in one of the two dimensions. A generic pilot pattern covers completely one dimension and covers partially the second dimension, within a segment of the second dimension where the propagation channel is considered to have a constant value. This can be seen from Figure 2, which shows three different pilots 1, 2 and 3 that occupy completely the dimension of the x-axis, in this case the x-axis dimension is time. As can be seen in the depicted particular case, the pilots only occupy the first six carriers of each segment. Therefore, we have explicitly allowed that the alphabet size of the generic pattern can be smaller than the sampling interval in the second dimension, because if the channel is constant over each segment in the second dimension, then pilot tones do not necessarily need to be placed at each and every position in the time-frequency grid of the mentioned segment. The channel estimates taken at any position within the segment will be of the same quality as from any other position within the segment. This allows a higher flexibility in the generic pilot pattern design, as well as higher flexibility in coordination between the data and pilot subcarriers. The second dimension is divided into segments; in this case each segment includes 11 subcarriers. Then, the generic pilot pattern is repeated along the second dimension, in this case frequency, where the repetition interval of the generic pilot pattern is equal to the required sampling interval in the second dimension. As can be seen from Figure 2, the pattern of the lower part of the grid is indeed repeated 11 subcarriers above the lower part.

In this way, using a generic pattern as above and then duplicating this pattern along one dimension of the pilot pattern grid gives great flexibility in pattern generation, while preserving equidistant sampling properties of patterns.

With this method, it becomes possible to generate a large set of different pilot patterns and that yields several benefits. A first benefit is that the problem with interference, due to channel properties or due to other users, can be greatly relieved. This is because the great number of patterns will be able to "average" out disturbances. This averaging could be performed by pseudo-randomly changing pilot patterns for a particular user for consecutive transmission time intervals. At the same time, for MIMO applications the need for a multitude of patterns will be fulfilled. Another benefit is that because the generic pilot pattern will cover partially the second dimension within a segment of that dimension, and not necessarily the whole of that segment, this is a solution to the problem with resources planning, as above.

According to the invention the generic pilot pattern could be obtained from an integer sequence by separating the successive sequence elements with equal number of empty signalling units, corresponding to the required sampling interval in the first dimension, while the sequence elements determine the position of tones in the second dimension. As can be seen in Figure 2, along the x-axis, in this case corresponding to time and the first dimension, pilots are placed every second time slot. So this is an implementation with the number of empty signalling units being one (1) corresponding to a sampling interval in the first dimension (time in this case) of two time slots. The value of the sequence corresponds to the position of the pilot, for instance in Figure 1 the sequence of pilot 1 would be {0,1,4,...} corresponding to sub carriers 0, 1, 4, ... in time slots 0, 2, 4,...

A general construction method for a large set of generic pilot patterns with limited cross correlation is proposed, on the basis of so-called associative polynomials. The integer sequence used for generic pattern generation for that large set is obtained by mapping from a sequence { f(i) }of length L defined as

$$f(i) = P[x(i)], \qquad i = 0, 1, \ldots, L-1 \qquad (1)$$

$$P(x) = \sum_{j=0}^{k} n_j x^j \quad , \qquad (2)$$

where P(x) is an associated polynomial of a degree k, whose argument function x(i) is a sequence of elements of a Galois Field GF(Q), where "i" is the ordinal number of the sequence element x(i), and where multiplications and additions in the polynomial P(x) are performed in GF(Q), Q is power of prime.

The set of generic pilot patterns could be obtained from the set of associated polynomials with different coefficients $n_j$. The maximum number of different patterns, then, is $Q^{k+1}$.

It can be easily shown by finding the difference polynomial of the two associated polynomials, that in this way the maximum number of hits between any two sequences is equal to the product of the maximum order (k) of the polynomials and the maximum number of appearances of the same element in the sequence x(i).

The generic pilot pattern could be obtained from an integer sequence by separating the successive sequence elements with equal number of empty signalling units, corresponding to the required sampling interval in the first dimension, while values of the sequence elements determine the position of tones in the second dimension. In this way a universal method of generating the generic pilot pattern is devised and equidistant sampling properties are preserved.

The integer sequence could for instance be obtained by mapping from a sequence f(i)= P[x(i)], where

$$P(x) = \sum_{j=0}^{k} n_j x^j$$ is an associated polynomial of a degree k, whose argument function x(i) is a sequence of elements of a Galois Field GF(Q), where "i" is the ordinal number of the sequence element x(i), and where multiplications and additions in the polynomial P(x) are performed in GF(Q), Q is power of prime. A set of generic pilot patterns could be obtained from a set of associated polynomials with different coefficients. The use of an associated polynomial yields a large set of pilot patterns with limited cross correlation. So it is possible achieve a large set of pilot patterns that has a predictable level of orthogonality for any pair of pilot patterns in the set.

According to the invention, for applications where concurrent users of different pilot patterns (e.g. base stations in a cellular system) are not mutually time synchronized, three general construction methods for sets of pilot patterns are proposed, on the basis of the specific argument functions x(i) and specific sets of the associated polynomials.

All three construction methods produce sets of patterns where each pair of pilot patterns has at most either k or 2k hits under arbitrary mutual non-zero periodic time shift. Proofs of the mathematical properties for these construction methods can be found in:

B.M.Popovic, "New sequences for asynchronous frequency-hopping multiplex", IEEE Electronics Letters, Vol. 22, No. 12, pp. 640-642, June 5, 1986,

R.M.Mersereau and T.S.Seay, "Multiple access frequency hopping patterns with low ambiguity", IEEE Transactions on Aerospace and Electronics Systems, Vol. AES-17, pp.571-578, July 1981, and

T.S.Seay, "Hopping patterns for bounded mutual interference and frequency hopping multiple access", IEEE Military Communications Conference, MILCOM-82, Boston, MA, pp.22.3.1-22.3.6, 1982.

Construction 1) is defined as:

$$1) \quad x(i) = i, \qquad i = 0, 1, 2, \dots, Q\text{-}1,$$

Q is a prime, $n_{k-1}$ is fixed in (2), all other coefficients $n_j$ take all the values from GF(Q).

This method produce sets of $Q^k$ patterns such that each pair of pilot patterns has at most k hits under arbitrary mutual non-zero periodic time shift.

Construction 2) is defined as:

$$2) \quad x(i) = \alpha^i, \qquad i = 0, 1, 2, \dots, Q\text{-}2,$$

$\alpha$ is a primitive element of *GF(Q), Q* is a power of prime, $n_1$ is fixed in (2), all other coefficients $n_j$ take all the values from GF(Q).

This method produces sets of $Q^k$ patterns such that each pair of pilot patterns has at most k hits under arbitrary mutual non-zero periodic time shift.

Both constructions 1) and 2) produce the same maximum number of different patterns, equal to $Q^k$. For a given maximum number of pair-wise hits, and the same number of different patterns, construction 1) is a bit better than construction 2) in terms of normalised cross correlation (k/L), because the length of resulting integer sequences is greater (Q instead of Q-1).

Construction 3) is defined as:

$$3) \quad x(i)= \begin{cases} 1/i, & i = 1,2,...,Q-1 \\ 0, & i = 0 \end{cases},$$

Q is a prime, all coefficients $n_j$ take all the values from GF(Q).

Construction 3) produces $Q^{k+1}$ different patterns of length *Q,* with at most $2k$ hits between any two patterns from the set for an arbitrary mutual non-zero cyclic time shift. Construction 3) can be modified to produce a smaller set of patterns but with reduced pair-wise interference, if the coefficient $n_0$ is fixed and all other coefficients $n_j$ take all the values from GF(*Q*). In that case, there are $Q^k$ different patterns of length *Q,* with at most $2k$-1 hits between any two patterns from the set for an arbitrary mutual non-zero cyclic time shift.

An outline of a proof for 3) would be as follows. We have to prove that the maximum number of hits between two different sequences is at most 2k for an arbitrary non-zero cyclic time shift p. Define two associate functions A(i) and B(i) for the sequences. Define the difference function D(i)=A(i+p)-B(i). It is now sufficient to show that the maximum number of zeros of D(i) is equal to 2k, and that D(i) can be a constant equal to zero only if the two sequences are the same.

Now consider, as an example, the generation of three pilot patterns. These are the patterns from Figure 2. In this case, we make the assumption that the sampling interval in the frequency domain is M=11 subcarriers and in the time domain 2 OFDM symbols. We use method 1), where x(i) is given by:

$$1) \; x(i)= i, \qquad i=0,1,2,..., Q-1,$$

and in this case with Q=7 and k=2. We shall fix the coefficient $n_{k-1} = n_1 = 0$. We study 3 out of the total of 49 ($Q^k = 7^2 = $ 49) associated polynomials: $P_1(x)=x^2$ , $P_2(x)=2x^2+1$, and $P_3(x)=3x^2+2$. Now, as we traverse the sequence i=0,1,2,...,6, each polynomial outputs a corresponding sequence. For instance for $p_1$ the sequence is: 0,1,4,2,2,4,... The last element, shown, of this sequence is 4, because $5^2$ mod(6)=4. I.e. it was a requirement of the method to perform computations in the Galois field GF(6). Now, one can easily see how this sequence for pilot 1 maps onto the T-F-grid. Each value of the sequence corresponds to the position of the pilot tone along the frequency (sub carrier) index.

It should be noted that the patterns in Figure2 are orthogonal, i.e. they have no hits. Thus, these patterns form a non-trivial subset of orthogonal pilot patterns that can be used for MIMO transmission as well. (The trivial orthogonal subsets can be obtained from the subsets of the polynomials with all the coefficients the same, except the $n_0$ coefficient.)

Such patterns are useful in multiple antenna transmission (MIMO) systems, where each of the orthogonal pilot patterns can be allocated for the transmissions from the different transmit antennas at the same base station (or user equipment). The other subset of orthogonal pilot patterns, but from the same set of pilot patterns with limited mutual interference, can ,be allocated for the MIMO transmissions from different transmit antennas at the other base stations. In that way it is ensured that even MIMO transmissions from the different asynchronous base stations would introduce limited and pre-determined mutual interference in the system.

Various argument functions, together with variations of Q and coefficients are possible, yielding various subsets of pilot patterns. Such variations include:

1) Q is a prime number and the argument function is x(i)=i, i=0,1,2,..., Q-1, the coefficient $n_{k-1}$ is fixed and all other coefficients $n_j$ take all the values from GF(Q).

2) Q is a power of prime and the argument function is x(i)=$\alpha$', i=0,1,2,..., Q-2, $\alpha$ is a primitive element of GF(Q), the coefficient $n_1$ is fixed and all other coefficients $n_j$ take all the values from GF(Q).

3) Q is a prime, the argument function is

$$x(i)=\begin{cases}1/i, & i=1,2,...,Q-1 \\ 0, & i=0\end{cases},$$

and all the coefficients $n_j$ take all the values from GF(Q). In a further subset of this subset, the coefficient $n_0$ is fixed and all other coefficients $n_j$ take all the values from GF(Q).

All three subsets above yields pilot pattern sets with predictable maximum amount of hits for every pair of patterns, under *arbitrary mutual non-zero periodic time shift*. That is to say, with the method above we also address the problem with orthogonality of the pilot patterns, also for users that are not time synchronised.

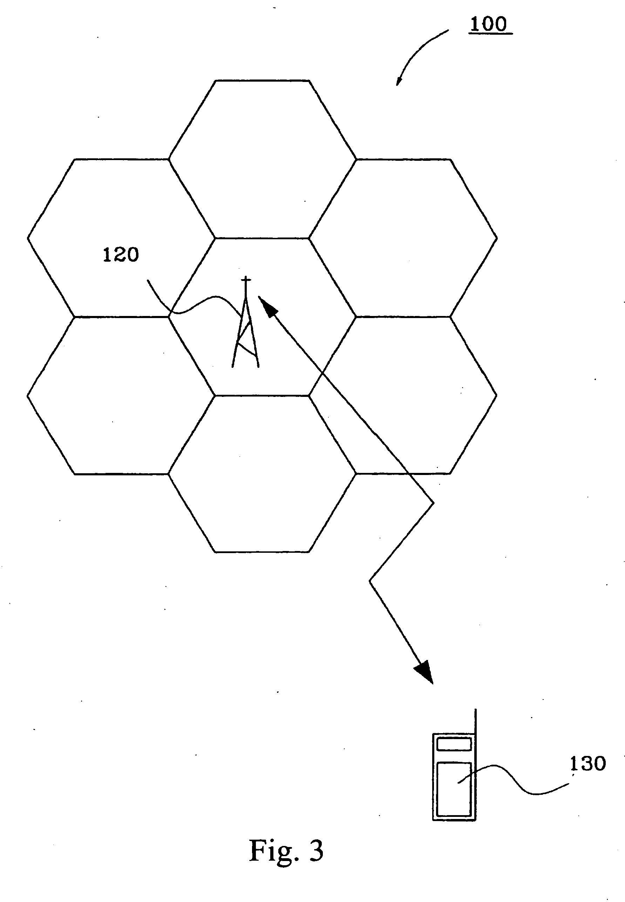

Now with reference to Figure 3, the invention also embraces a multiple access communication system, which for instance could include base station(s) 110 of a cellular system 100 and terminal(s) 130 communicating with said base station(s). The base station(s) and/or terminal(s) would include at least one transmitter with means for executing the method according to the invention. This means could be arranged to pseudo-randomly change pilot patterns from one transmission interval to another. The base station(s) and/or terminal(s) would also include at least one receiver including means for receiving and processing signals generated by the transmitter.

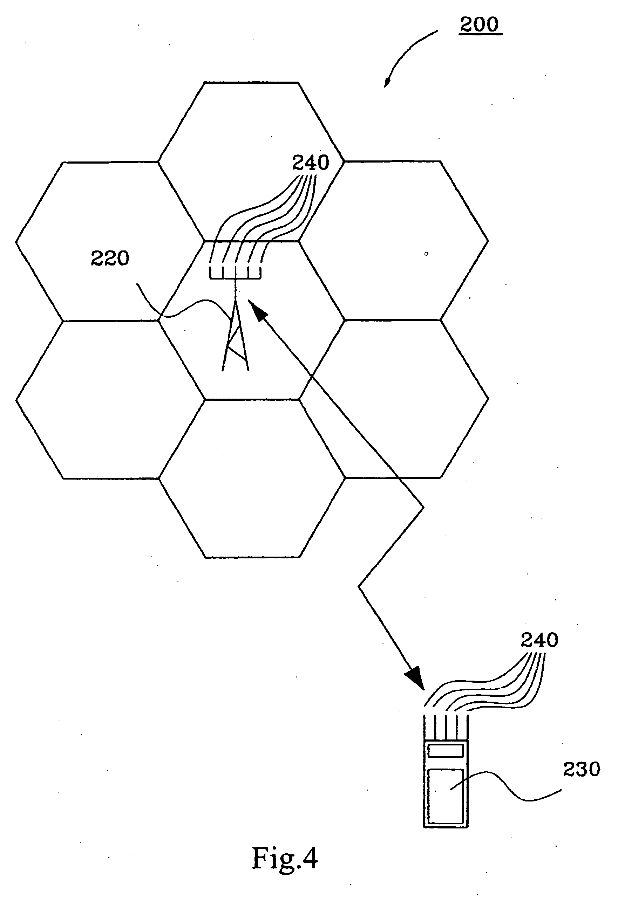

With reference to Figure 4, the invention also embraces a radio multiple access communication system including a number of antennas, such that various subsets of orthogonal pilot patterns according to the method of the invention are allocated to different users, for instance base station(s) 210 of a cellular system 200 and terminal(s) 230 communicating with said base station(s), so that each orthogonal pattern is used for the transmission from a particular transmit antenna 240. These pilot patterns could be changed pseudo-randomly from one transmission interval to another.

It is understood that the description of the invention has been provided as explanatory only, and the invention could be varied in many ways within the scope of the attached claims.

For instance, it is possible to switch dimensions so that the first dimension of the generic pilot pattern becomes frequency and the second dimension becomes time.

## Claims

1. A method for generating, in a multiple access communication system, two-dimensional pilot patterns for propagation channel estimation in time and frequency, with equidistant sampling, said patterns comprising tones placed in time and frequency units, **characterised by:**

    - generating a generic pilot pattern that covers a first dimension and covers partially a second dimension, within a segment of the second dimension where the propagation channel is considered to have a constant value, wherein the generic pilot pattern is obtained from an integer sequence by separating successive sequence elements by an equal number of empty signalling time-frequency units, the number of signalling time-frequency units corresponding to a required sampling interval in a first dimension, and by non-zero elements of the integer sequence determining one or more positions of tones in the second dimension; and
    - performing periodical duplication of the generic pilot pattern along the second dimension, where the duplication interval of the generic pilot pattern is equal to a required sampling interval in the second dimension, wherein the integer sequence represents polynomial coefficients of an associated polynomial and the corresponding generic pilot pattern belongs to a set of generic pilot patterns obtained from a set of associated polynomials with different coefficients, wherein the integer sequence is obtained by mapping from a sequence f(i)= P[x(i)],

    where $P(x)=\sum_{j=0}^{k}n_j x^j$ is an associated polynomial of a degree k, whose argument function x(i) is a sequence of elements of a Galois Field GF(Q) where, "i" is the ordinal number of the sequence element x(i), and where multiplications and additions in the polynomial P(x) are performed in the Galois Field GF(Q), Q is power of prime.

2. The method according to claim 1, wherein the first dimension is time and the second dimension is frequency, or vice versa.

3. The method according to claim 1, wherein the Galois Field is GF(Q), Q is a prime, the argument function is x(i)=i, i=0,1,2,..., Q-1, the coefficient $n_{k-1}$ is fixed and all other coefficients $n_j$ take all the values from GF(Q).

**4.** The method according to claim 1, wherein the Galois Field is GF(Q), Q is a power of a prime and the argument function is $x(i)=\alpha^i$, i=0,1,2,..., Q-2, $\alpha$ is a primitive element of GF(Q), the coefficient $n_1$ is fixed and all other coefficients $n_j$ take all the values from GF(Q).

**5.** The Method according to claim 1, wherein the Galois Field is GF(Q), Q is a prime, the argument function is

$$x(i)=\begin{cases}1/i, & i=1,2,...,Q-1\\ 0, & i=0\end{cases},$$

and all the coefficients $n_j$ take all the values from GF(Q).

**6.** The Method according to claim 5, wherein the coefficient $n_0$ is fixed and all other coefficients $n_j$ take all the values from GF(Q).

**7.** A transmitter (120,130,220,230) for a multiple access communication system including means for executing a method according to any of claims 1-6.

**8.** The transmitter according to claim 7 wherein the means is arranged to pseudo-randomly change pilot patterns from one transmission interval to another.

**9.** A receiver (120,130,220,230) for a multiple access communication system including means for receiving and processing signals generated by a transmitter according to claim 7 or 8.

**10.** A multiple access communication system including at least one transmitter according to claim 7 or 8, and at least one receiver according to claim 9.

**11.** A radio multiple access communication system with a number of antennas(240), wherein various subsets of orthogonal pilot patterns generated according to the method of claim 1 are allocated to different users with each user a single subset, so that each orthogonal pattern is used for a transmission from a particular transmit antenna (240).

**12.** The radio multiple access communication system according to claim 11, wherein the pilot patterns are changed pseudo-randomly from one transmission interval to another.

**Patentansprüche**

**1.** Verfahren zum Erzeugen in einem Mehrfachzugriff-Kommunikationssystem zweidimensionaler Pilotmuster für eine Ausbreitungskanalschätzung hinsichtlich Zeit und Frequenz mit äquidistanter Abtastung, wobei die Muster Töne enthalten, die in Zeit- und Frequenzeinheiten angeordnet sind, **gekennzeichnet durch:**

- Erzeugen eines generischen Pilotmusters, das eine erste Dimension abdeckt und eine zweite Dimension teilweise abdeckt, in einem Segment der zweiten Dimension, wo der Ausbreitungskanal als einen konstanten Wert besitzend angesehen wird, wobei das generische Pilotmuster aus einer Ganzzahlsequenz erhalten wird **durch** Trennen aufeinander folgender Sequenzelemente **durch** eine gleiche Anzahl leerer Signalgebungs-Zeit/Frequenz-Einheiten, wobei die Anzahl von Signalgebungs-Zeit/Frequenz-Einheiten einem geforderten Abtastintervall in einer ersten Dimension entspricht, und **durch** von null verschiedene Elemente der Ganzzahlsequenz, die eine oder mehrere Positionen von Tönen in der zweiten Dimension bestimmen; und
- Ausführen einer periodischen Verdoppelung des generischen Pilotmusters in der zweiten Dimension, wo das Verdoppelungsintervall des generischen Pilotmusters gleich einem geforderten Abtastintervall in der zweiten Dimension ist, wobei die Ganzzahlsequenz Polynomkoeffizienten eines zugeordneten Polynoms repräsentiert und das entsprechende generische Pilotmuster zu einer Menge generischer Pilotmuster gehört, die aus einer Menge zugeordneter Polynome mit verschiedenen Koeffizienten erhalten werden, wobei die Ganzzahlsequenz **durch** Abbilden von einer Sequenz $f(i) = P[x(i)]$ erhalten wird, wobei $P(x) = \sum_{j=0}^{k} n_j x^j$ ein zugeordnetes

EP 1 886 428 B1

Polynom mit Grad *k* ist, dessen Argumentfunktion $x(i)$ eine Sequenz von Elementen eines Galois-Feldes *GF (Q)* ist, wobei "*i*" die Ordinalzahl des Sequenzelements $x(i)$ ist und wobei Multiplikationen und Additionen in dem Polynom $P(x)$ in dem Galois-Feld *GF(Q)* ausgeführt werden, wobei Q die Primzahlpotenz ist.

2. Verfahren nach Anspruch 1, wobei die erste Dimension die Zeit ist und die zweite Dimension die Frequenz ist oder umgekehrt.

3. Verfahren nach Anspruch 1, wobei das Galois-Feld gleich *GF(Q)* ist, wobei *Q* eine Primzahl ist, wobei die Argumentfunktion *x(i) = i* ist, mit *i* = 0, 1, 2, ..., *Q* - 1, wobei der Koeffizient $n_{k-1}$ fest ist und alle anderen Koeffizienten $n_j$ sämtliche Werte von *GF(Q)* annehmen.

4. Verfahren nach Anspruch 1, wobei das Galois-Feld *GF(Q)* ist, wobei *Q* eine Primzahlpotenz ist und die Argumentfunktion $x(i) = \alpha^i$ ist, mit *i* = 0, 1, 2, ..., *Q* - 2, $\alpha$ ein primitives Element von *GF(Q)* ist, der Koeffizient $n_l$ fest ist und alle anderen Koeffizienten $n_j$ sämtliche Werte von *GF(Q)* annehmen.

5. Verfahren nach Anspruch 1, wobei das Galois-Feld gleich *GF(Q)* ist, wobei *Q* eine Primzahl ist, wobei die Argumentfunktion

$$x(i) = \begin{cases} \dfrac{1}{i}, & i = 1, 2, ..., Q-1 \\ 0, & i = 0 \end{cases}$$

ist und alle Koeffizienten $n_j$ sämtliche Werte von *GF(Q)* annehmen.

6. Verfahren nach Anspruch 5, wobei der Koeffizient $n_0$ fest ist und alle anderen Koeffizienten $n_j$ sämtliche Werte von *GF(Q)* annehmen.

7. Sender (120, 130, 220, 230) für ein Mehrfachzugriff-Kommunikationssystem, das Mittel zum Ausführen eines Verfahrens nach einem der Ansprüche 1-6 enthält.

8. Sender nach Anspruch 7, wobei die Mittel dazu ausgelegt sind, Pilotmuster von einem Sendeintervall zu einem weiteren Sendeintervall pseudozufällig zu ändern.

9. Empfänger (120, 130, 220, 230) für ein Mehrfachzugriff-Kommunikationssystem, mit Mitteln zum Empfangen und Verarbeiten von Signalen, die durch einen Sender nach Anspruch 7 oder 8 erzeugt werden.

10. Mehrfachzugriff-Kommunikationssystem, das wenigstens einen Sender nach Anspruch 7 oder 8 und wenigstens einen Empfänger nach Anspruch 9 enthält.

11. Mehrfachzugriff-Funkkommunikationssystem mit einer Anzahl von Antennen (240), wobei verschiedene Untermengen orthogonaler Pilotmuster, die gemäß dem Verfahren nach Anspruch 1 erzeugt werden, verschiedenen Anwendern, jedem Anwender eine einzelne Untermenge, zugewiesen werden, so dass jedes orthogonale Muster für einen Sendevorgang von einer bestimmten Sendeantenne (240) verwendet wird.

12. Mehrfachzugriff-Funkkommunikationssystem nach Anspruch 11, wobei die Pilotmuster von einem Sendeintervall zu einem weiteren Sendeintervall pseudozufällig geändert werden.

**Revendications**

1. Procédé de génération, dans un système de communication à accès multiple, de configurations pilotes bidimensionnelles pour l'estimation d'un canal de propagation en temps et en fréquence, avec un échantillonnage équidistant, lesdites configurations comprenant des tonalités placées dans des unités de temps et de fréquence, **caractérisé par** :

9

- la génération d'une configuration pilote générique qui couvre une première dimension et couvre partiellement une seconde dimension, dans un segment de la seconde dimension où le canal de propagation est considéré avoir une valeur constante, dans lequel la configuration pilote générique est obtenue à partir d'une séquence de nombres entiers en séparant des éléments de séquence successifs par un nombre égal d'unités de temps-fréquence de signalisation vides, le nombre d'unités de temps-fréquence de signalisation correspondant à un intervalle d'échantillonnage requis dans une première dimension, et par des éléments non nuls de la séquence de nombres entiers déterminant une ou plusieurs positions de tonalités dans la seconde dimension ; et

- l'exécution d'une reproduction périodique de la configuration pilote générique dans la seconde dimension, l'intervalle de reproduction de la configuration pilote générique étant égal à un intervalle d'échantillonnage requis dans la seconde dimension, la séquence de nombres entiers représentant des coefficients polynomiaux d'un polynôme associé et la configuration pilote générique correspondante appartenant à un ensemble de configurations pilotes génériques obtenues à partir d'un ensemble de polynômes associés aux coefficients différents, dans lequel la séquence de nombres entiers est obtenue par mappage à partir d'une séquence f(i) = P[x(i)], où

$$P(x) = \sum_{j=0}^{k} n_j x^j$$ est un polynôme associé de degré k, dont la fonction d'arguments x(i) est une séquence d'éléments d'un Champ de Galois GF(Q), où "i" est le nombre ordinal de l'élément de séquence x(i), et où des multiplications et additions dans le polynôme P(x) sont exécutées dans le Champ de Galois GF(Q), Q étant une puissance de nombre premier.

2. Procédé selon la revendication 1, dans lequel la première dimension est le temps et la seconde dimension est la fréquence, ou vice versa.

3. Procédé selon la revendication 1, dans lequel le Champ de Galois est GF(Q), Q est un nombre premier, la fonction d'arguments est x(i) = i, i = 0, 1, 2, ..., Q-1, le coefficient $n_{k-1}$ est fixe et tous les autres coefficients $n_j$ prennent toutes les valeurs de GF(Q).

4. Procédé selon la revendication 1, dans lequel le Champ de Galois est GF(Q), Q est une puissance d'un nombre premier, la fonction d'arguments est x(i) = $\alpha^i$, i = 0, 1, 2, ..., Q-2, $\alpha$ est un élément primitif de GF(Q), le coefficient $n_1$ est fixe et tous les autres coefficients $n_j$ prennent toutes les valeurs de GF(Q).

5. Procédé selon la revendication 1, dans lequel le Champ de Galois est GF(Q), Q est un nombre premier, la fonction d'arguments est

$$x(i) = \begin{cases} 1/i, & i = 1, 2, ..., Q-1 \\ 0, & i = 0 \end{cases},$$

et tous les coefficients $n_j$ prennent toutes les valeurs de GF(Q).

6. Procédé selon la revendication 5, dans lequel le coefficient $n_0$ est fixe et tous les autres coefficients $n_j$ prennent toutes les valeurs de GF(Q).

7. Emetteur (120, 130, 220, 230) d'un système de communication à accès multiple comportant un moyen pour exécuter un procédé selon l'une quelconque des revendications 1 à 6.

8. Emetteur selon la revendication 7, dans lequel le moyen est agencé pour changer de façon pseudo-aléatoire des configurations pilotes d'un intervalle de transmission à un autre.

9. Récepteur (120, 130, 220, 230) d'un système de communication à accès multiple comportant un moyen pour recevoir et traiter des signaux générés par un émetteur selon la revendication 7 ou 8.

10. Système de communication à accès multiple comportant au moins un émetteur selon la revendication 7 ou 8, et au moins un récepteur selon la revendication 9.

**11.** Système de communication radio à accès multiple comportant une pluralité d'antennes (240), dans lequel divers sous-ensembles de configurations pilotes orthogonales générées selon le procédé de la revendication 1 sont attribués à différents utilisateurs à raison d'un sous-ensemble par utilisateur, de telle sorte que chaque configuration orthogonale soit utilisée pour une transmission depuis une antenne d'émission particulière (240).

**12.** Système de communication radio à accès multiple selon la revendication 11, dans lequel les configurations pilotes sont changées de façon pseudo-aléatoire d'un intervalle de transmission à un autre.

Fig.1

Fig.2

Fig. 3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1148673 A2
- US 20040246998 A1

**Non-patent literature cited in the description**

- Base station identification for FH-OFDMA systems. VTC 2004. spring, 2004
- **B.M.POPOVIC.** New sequences for asynchronous frequency-hopping multiplex. *IEEE Electronics Letters,* 05 June 1986, vol. 22 (12), 640-642
- **R.M.MERSEREAU ; T.S.SEAY.** Multiple access frequency hopping patterns with low ambiguity. *IEEE Transactions on Aerospace and Electronics Systems,* July 1981, vol. AES-17, 571-578
- **T.S.SEAY.** Hopping patterns for bounded mutual interference and frequency hopping multiple access. *IEEE Military Communications Conference, MIL-COM-82,* 1982, 22.3.1-22.3.6